# EUROPEAN PATENT SPECIFICATION

(11) **EP 2 040 034 B1**
(45) Date of publication and mention of the grant of the patent: **29.08.2012**
(21) Application number: 07768055.1
(22) Date of filing: 03.07.2007
(51) Int. Cl.: G01C 21/36

(54) **NAVIGATION DEVICE AND METHOD, NAVIGATION PROGRAM, AND STORAGE MEDIUM**
NAVIGATIONSEINRICHTUNG UND- VERFAHREN, NAVIGATIONSPROGRAMM UND SPEICHERMEDIUM
DISPOSITIF ET PROCÉDÉ DE NAVIGATION, PROGRAMME DE NAVIGATION, ET SUPPORT DE STOCKAGE

(30) Priority: 03.07.2006 JP 2006183425
(43) Date of publication of application: 25.03.2009
(73) Proprietor: Pioneer Corporation, Kanagawa 212-0031 (JP)
(72) Inventor: WATANABE, Tomoo, Kanagawa 212-0031 (JP)
(74) Representative: Viering, Jentschura & Partner
(86) International application number: PCT/JP2007/063281
(87) International publication number: WO 2008/004537

(56) References cited:
- WO-A1-2004/029551
- JP-A- 06 258 087
- JP-A- 07 113 652
- JP-A- 08 304 097
- JP-A- 09 119 846
- JP-A- 2000 161 968
- JP-A- 2005 321 364
- US-A- 6 127 969
- US-A1- 2002 128 772
- US-A1- 2005 049 780

## Description

### Technical Field

The present invention relates to a navigation apparatus and method, a navigation program, and a memory medium.

### Background Art

For example, such a navigation apparatus is known that displays a traveling direction or the like, on a route to a destination point, with a travel of a movable body such as a vehicle. For example, in a patent document 1 or the like, a navigation apparatus displays a searched route (hereinafter referred to as a "guided route" as occasion demands) on a map on a display, and displays guidance information, such as an arrow, which indicates the traveling direction of the movable body on a screen of a display apparatus when the movable body approaches a guidance point, such as an intersection, in a route guidance process. A similar device is shown in US 2002/0128772 A1

Patent document 1: Japanese Patent Application Laid Open NO. 2004-45185

### Disclosure of Invention

### Subject to be Solved by the Invention

However, there is such a technical problem that when a direction indicating a true destination point at which the movable body is to arrive, is displayed for a user of the movable body on the display described above, the direction indicating the true destination point is far from a direction on a road to actually travel on, which is determined on the basis of the route search, which likely raises the user's fears, psychologically.

In view of the aforementioned conventional problem, it is therefore an object of the present invention to provide a navigation apparatus and method, a navigation program, and a memory medium, which enable the user of the movable body to travel or drive at ease, psychologically along the road to actually travel on, which is determined on the basis of the route search.

### Means for Solving the Subject

### (Navigation apparatus)

Hereinafter, the navigation apparatus of the present invention as defined in the independent claims will be explained. Preferred embodiments are defined in the dependent claims.

The above object can be achieved by a navigation apparatus according to claim 1.

According to the navigation apparatus , the route setting device sets the route (or guided route) to the true destination point at which it is desired to arrive, from the current position of the movable body. The determining device determines the temporary objective point which exists on or near the route. Here, the "temporary objective point" of the present invention means an objective point which is a mark geographically or administratively related to a passing-through point on the route. The route is displayed on the display screen owned by the displaying device. Under the control of the controlling device, the displaying device displays the index which indicates the direction of the determined temporary objective point, in addition to the route.

In particular, according to the present invention, instead of the direction which indicates the true destination point, the direction which indicates the temporary objective point is displayed, so that it is possible to effectively inhibit that the direction on the road to actually travel on, which is determined on the basis of the route search, is far from the direction which indicates the temporary objective point.

If the direction which indicates the true destination point is displayed for a user of the movable body, the direction on the road to actually travel on, which is determined on the basis of the route search, is far from the direction which indicates the true destination point, which raises the user's fears, psychologically.

In contrast, instead of the direction which indicates the true destination point, the direction which indicates the temporary objective point is displayed, so that it is possible to effectively inhibit that the direction on the road to actually travel on, which is determined on the basis of the route search, is far from the direction which indicates the temporary objective point. As a result, the user of the movable body can travel or drive at ease, psychologically along the road to actually travel on, which is determined on the basis of the route search.

In the navigation apparatus , the determining device determines the temporary objective point in accordance with a display scale on the display screen.

According to this aspect, the temporary objective point is determined in accordance with the display scale of the display screen displayed for the user of the movable body. Specifically, if the display scale is small, the temporary objective point is determined on the basis of brief information, such as a large city. On the other hand, if the display scale is large, the temporary objective point is determined on the basis of detailed information, such as a city, a town, and a village.

Therefore, it is possible to more effectively inhibit that the direction on the road to actually travel on, which is determined on the basis of the route search, is far from the direction which indicates the temporary objective point, in accordance with the display scale of the display screen. In addition, it is possible to more simply display the outline of the direction on the road to actually travel on, which is determined on the basis of the route search, and the direction which indicates the temporary objective point, for the user of the movable body, in accordance with the display scale of the display screen.

In another aspect of the navigation apparatus , the determining device determines one or a plurality of passing-through points on the route, as the temporary objective point.

According to this aspect, instead of the direction which indicates the true destination point, the direction which indicates the one or the plurality of passing-through points on the route is displayed as the temporary objective point, so that it is possible to more effectively inhibit that the direction on the road to actually travel on, which is determined on the basis of the route search, is far from the direction which indicates the passing-through point(s).

In the navigation apparatus , the determining device determines a representative point (e.g. a city hall) which represents an administrative district located on the route, as the temporary objective point.

According to this aspect, the index which indicates the direction to the temporary objective point, determined administratively, logically or geographically such as an administrative district and an administrative organ, can be displayed for the user of the movable body.

In the navigation apparatus , the determining device determines a start point and an end point of the route, or a middle point of a way, which are included in an administrative district located on the route, as the temporary objective point.

According to this aspect, the index which indicates the direction to the temporary objective point, determined geographically, such as an administrative district, can be displayed for the user of the movable body.

In another aspect of the navigation apparatus , the index is a graphic (an arrow, a straight line, and a cubic diagram) in a predetermined shape and in a predetermined color.

According to this aspect, the index with improved visibility can be displayed for the user of the movable body.

In another aspect of the navigation apparatus , it is further provided with an obtaining device for obtaining information as for the current position of the movable body.

According to this aspect, the temporary objective point can be determined, highly accurately, on the basis of the information as for the current position obtained by the obtaining device.

### (Navigation method)

Hereinafter the navigation method of the present invention will be explained.

The above object can be also achieved by a navigation method according to claim 4.

According to the navigation method , it is possible to receive the same various benefits as those of the navigation apparatus of the present invention described above.

Incidentally, in response to the various aspects of the navigation apparatus described above, the navigation method of the present invention can also adopt various aspects.

### (Navigation program)

Hereinafter, the navigation program of the present invention will be explained.

The above object can be also achieved by a navigation program according to claim 5.

According to the navigation program , the aforementioned navigation apparatus of the present invention can be embodied relatively readily, by loading the computer program from a recording medium for storing the computer program, such as a ROM, a CD-ROM, a DVD-ROM, a hard disk or the like, into the computer, or by downloading the computer program, which may be a carrier wave, into the computer via a communication device.

Incidentally, in response to the various aspects of the navigation apparatus described above, the navigation program of the present invention can also adopt various aspects.

The above object of the present invention can be also achieved by a computer program product in a computer-readable medium for tangibly embodying a program of instructions executable by a computer provided for the navigation apparatus described above (including its various aspects), the computer program product making the computer function as at least one portion of the route setting device, the determining device, the displaying device, and the controlling device.

According to the computer program product , the aforementioned navigation apparatus of the present invention can be embodied relatively readily, by loading the computer program product from a recording medium for storing the computer program product, such as a ROM (Read Only Memory), a CD-ROM (Compact Disc - Read Only Memory), a DVD-ROM (DVD Read Only Memory), a hard disk or the like, into the computer, or by downloading the computer program product, which may be a carrier wave, into the computer via a communication device. More specifically, the computer program product may include computer readable codes to cause the computer (or may comprise computer readable instructions for causing the computer) to function as the aforementioned navigation apparatus of the present invention

### (Memory medium)

Hereinafter the memory medium will be explained.

The above object can be also achieved by a memory medium storing the aforementioned navigation program (including its various aspects).

According to the memory medium, it is possible to make the computer appropriately function as the navigation apparatus of the present invention described above, by making the computer read the navigation program described above.

These effects and other advantages will become more apparent from an embodiment explained below.

As explained above, according to the navigation apparatus and method, it is provided with the route setting device and process, the determining device and process, the displaying device and process, and the controlling device and process, respectively. As a result, instead of the direction which indicates the true destination point, the direction which indicates the temporary objective point is displayed, so that it is possible to effectively inhibit that the direction on the road to actually travel on, which is determined on the basis of the route search, is far from the direction which indicates the temporary objective point. As a result, the user of the movable body can travel or drive at ease, psychologically along the road to actually travel on, which is determined on the basis of the route search.

Moreover, according to the navigation program , it makes the computer function as the navigation apparatus of the present invention described above. Thus, instead of the direction which indicates the true destination point, the direction which indicates the temporary objective point is displayed, so that it is possible to effectively inhibit that the direction on the road to actually travel on, which is determined on the basis of the route search, is far from the direction which indicates the temporary objective point. As a result, the user of the movable body can travel or drive at ease, psychologically along the road to actually travel on, which is determined on the basis of the route search.

Furthermore, according to the memory medium , it is possible to make the computer appropriately function as the navigation apparatus of the present invention described above, by making the computer read the navigation program described above.

### Brief Description of Drawings

[FIG. 1] FIG. 1 is a block diagram conceptually showing the basic structure of a navigation apparatus in an embodiment.
[FIG. 2] FIG. 2 is a flowchart showing a flow of a route search process, a route guidance process, and an index display process in the embodiment.
[FIG. 3] FIG. 3 is a schematic diagram conceptually showing one example of a display screen on which a guided route and an index in the embodiment are displayed.
[FIG. 4] FIG. 4 is a table showing a relationship between a temporary objective point indicated by the index in the embodiment and a display scale.
[FIG. 5] FIG. 5 is a schematic diagram conceptually showing another example of the display screen on which the guided route and the index in the embodiment are displayed.
[FIG. 6] FIG. 6 is a schematic diagram schematically showing the display screen in which an entire portion of the map and the guided route from a current position to a destination point on the map are displayed, in the embodiment.
[FIG. 7] FIG. 7 is a schematic diagram schematically showing the display screen in which one portion of the map and the guided route from the current position to the destination point on the map are displayed, in the embodiment.
[FIG. 8] FIG. 8 is a schematic diagram schematically showing the display screen in which one portion of the map and the guided route from the current position to the destination point on the map are displayed, in a comparison example.

### Description of Reference Codes

- 1: navigation apparatus
- 22: CPU
- 23: ROM
- 24: RAM
- 36: data memory unit
- 44: display

### Best Mode for Carrying Out the Invention

Hereinafter, the best mode for carrying out the present invention will be explained in each embodiment in order with reference to the drawings. Incidentally, the following explains an example in which the present invention is applied to an on-vehicle navigation apparatus.

### (1) Basic structure

### (Navigation apparatus)

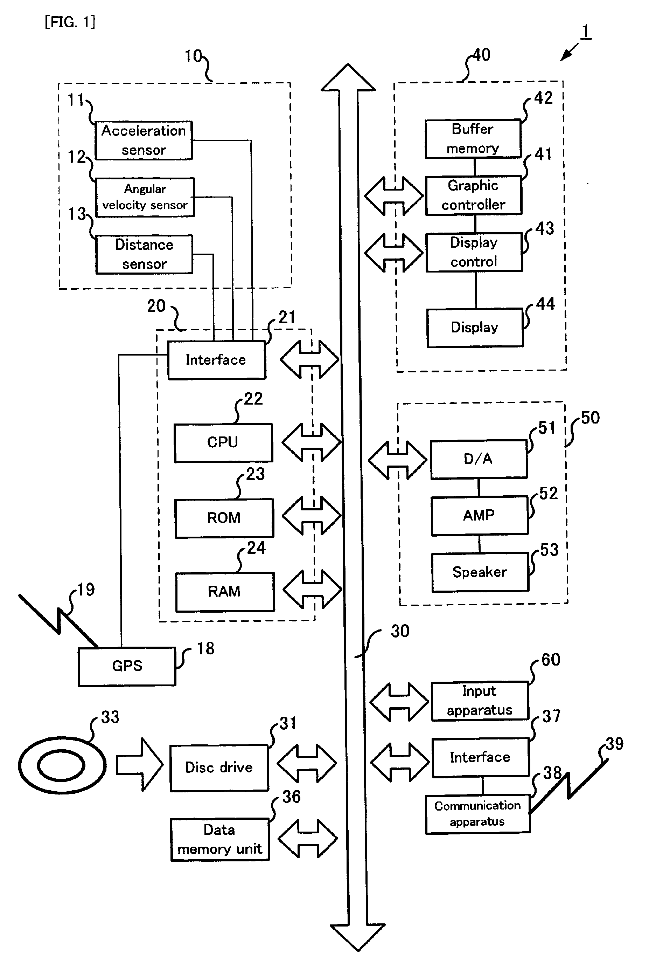

Firstly, with reference to FIG. 1, an explanation will be given on the basic structure of a navigation apparatus in an embodiment. FIG. 1 is a block diagram conceptually showing the basic structure of the navigation apparatus in the embodiment.

As shown in FIG. 1, a navigation apparatus 1 is provided with: a self-positioning apparatus 10; a GPS receiver 18; a system controller 20; a disc drive 31; a data memory unit 36; a communication interface 37; a communication apparatus 38; a display unit 40; an audio output unit 50; and an input apparatus 60.

The self-positioning apparatus 10 is provided with: an acceleration sensor 11; an angular velocity sensor 12; and a distance sensor 13. The acceleration sensor 11 is formed of e.g. a piezo element, detects an acceleration of a vehicle, and outputs acceleration data. The angular velocity sensor 12 is formed of e.g. a vibratory gyroscope, detects an angular velocity of the vehicle when the vehicle changes its direction, and outputs angular velocity data and relative orientation data. The distance sensor 13 measures a vehicle-speed pulse, which is formed of a pulse signal generated with the rotation of the wheels of the vehicle.

The GPS receiver 18 receives a radio wave 19 which can carry downlink data including positioning data, from a plurality of GPS satellites. The positioning data is used to detect an absolute position of the vehicle from latitude and longitude information or the like. Incidentally, one example of the obtaining device of the present invention is constructed of the self-positioning apparatus 10 and the GPS receiver 18.

The system controller 20 includes: an interface 21; a CPU (Central Processing Unit) 22; a ROM (Read Only Memory) 23; and a RAM 24 (Random Access Memory) 24, and controls the entire navigation apparatus 1. Incidentally, one example of the controlling device, the route setting device, and the determining device of the present invention is constructed of the system controller 20.

The interface 21 performs an interface operation with the GPS receiver 18 on the acceleration sensor 11, the angular velocity sensor 12, and the distance sensor 13. Then, from these, the vehicle-speed data, the acceleration data, the relative orientation data, the angular velocity data, the GPS positioning data, absolute orientation data, and the like, are inputted to the system controller 20. The CPU 22 controls the entire system controller 20. The ROM 23 has a not-illustrated nonvolatile memory in which a control program or the like for controlling the system controller 20 is stored. The RAM 24 readably stores various data, such as route data, set in advance by a user through the input apparatus 60, and provides a working area for the CPU 22.

The system controller 20, the disc drive 31 such as a CD-ROM drive or a DVD-ROM drive, the data memory unit 36, the communication interface 37, the display unit 40, the audio output unit 50, and the input apparatus 60 are connected to each other through a bus line 30.

The disc drive 31 reads the content data such as music data and video data, from the disc 33 such as a CD or a DVD, and outputs it, under the control of the system controller 20. Incidentally, the disc drive 31 may be either a CD-ROM drive or a DVD-ROM drive, or a CD and DVD compatible drive.

The data memory unit 36 is provided with a HDD or the like, and it is a unit for string various data used for a navigation process, such as map data and facility data. Incidentally, the details of the map data will be described later.

The communication apparatus 38 is provided with a FM tuner, a beacon receiver, a mobile phone, an exclusive communication card, or the like. The communication apparatus 38 receives road traffic information, such as traffic jam and traffic information, and other information, which are distributed from a VICS (Vehicle Information Communication System) center through the communication interface 37.

The display unit 40 displays various display data on a display apparatus, such as a display, under the control of the system controller 20. Specifically, the system controller 20 reads the map data from the data memory unit 36. The display unit 40 displays the map data read from the data memory unit 36 by the system controller 20, on a display screen such as a display. The display unit 40 is provided with: a graphic controller 41 for controlling the entire display unit 40 on the basis of control data transmitted from the CPU 22 through the bus line 30; a buffer memory 42, which is provided with a VRAM (Video RAM) and which temporarily stores image information that can be immediately displayed; a display control device 43 for display-controlling a display 44, such as a liquid crystal display and CRT (Cathode Ray Tube) display, on the basis of the image data outputted from the graphic controller 41; and the display 44. The display 44 is provided with a liquid crystal display apparatus or the like with a diagonal length of 5 to 10 inches, and it is attached near a front panel in a vehicle. Incidentally, one example of the displaying device of the present invention is constructed of the display unit 40.

The audio output unit 50 is provided with: a D/A (Digital to Analog) converter 51 for performing a D/A conversion on audio digital data, which is transmitted through the bus line 30 from the CD-ROM drive 31, the DVD-ROM 32, or the RAM 24 or the like, under the control of the system controller 20; an amplifier (AMP) 52 for amplifying an audio analog signal outputted from the D/A converter 51; and a speaker 53 for converting the amplified audio analog signal to audio and outputting it into a vehicle.

The input apparatus 60 is provided with a key, a switch, a button, a remote controller, an audio input apparatus, or the like, for inputting various commands and data. The input apparatus 60 is disposed in the surroundings of the display 44 and the front panel of the main body of the on-vehicle electronic system equipped in the vehicle. Moreover, if the display 44 is of a touch panel type, a touch panel provided on the display screen of the display 44 also functions as the input apparatus 60. The touch panel functions as the inputting device of the present invention.

The navigation apparatus of the present invention is achieved by that the CPU 22 of the navigation apparatus 1 executes a program stored in the ROM 23 or the like in advance. Therefore, the CPU 22 functions as the controlling device of the present invention.

Moreover, the CPU 22 performs route setting if a destination point is set by the user. A specific method of performing the route setting will be briefly described. If the route setting is performed, the user operates the input apparatus 60, to thereby set the destination point and instruct the navigation apparatus 1 to search for a route. The CPU 22 retrieves a necessary link and node information from the data memory unit 36 and calculates the route. Then, the CPU 22 stores route information with necessary map information into the buffer memory 42, and displays a map and the route to the destination point on the display screen of the display 44. Therefore, the CPU 22 also functions as the route searching device of the present invention.

The audio output unit 50 performs audio guidance such as "After 300 m, turn right" and "After 100m, turn right at a convenience store", in predetermined timing with regard to a guidance intersection to turn right or turn left on the route. Therefore, the audio output unit 50 functions as the audio guidance outputting device.

Incidentally, in the embodiment and a modified example, the guidance intersection merely indicates one example of the guidance point, and the present invention can be similarly applied to another guidance point, such as an entrance and an exit of an express way and a toll road, and an interchange, and other points at which the travelling direction of a vehicle needs to be changed, instead of the guidance intersection.

### (2) Operation principle

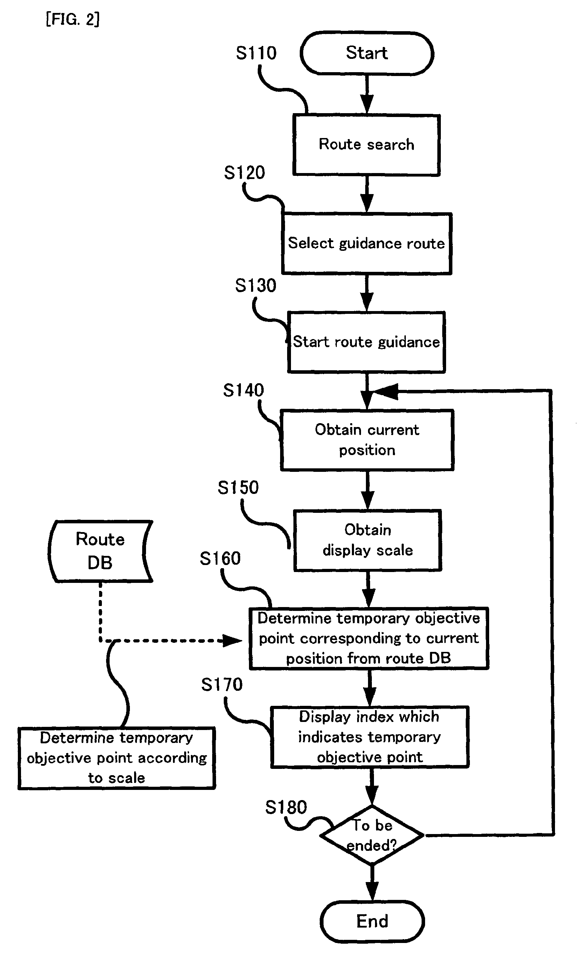

Next, with reference to FIG. 2, an explanation will be given on a route search process, a route guidance process, and an index display process in the embodiment. FIG. 2 is a flowchart showing a flow of the route search process, the route guidance process, and the index display process in the embodiment. Incidentally, the processes are performed by that the CPU 22 of the navigation apparatus 1 shown in FIG. 1 executes a route search program, a route guidance program, and an index display program, which are stored in the ROM 23 or the like in advance.

Firstly, when the user of a movable body operates the input apparatus 60, to thereby input a destination point and necessary search conditions or the like and input an instruction to perform a route search, the CPU 22 performs the route search on the basis of the inputted destination point and search conditions (step S110). At this time, the CPU 22 obtains a current position of the navigation apparatus 1 as the movable body from the CPU receiver 18, and performs the route search with the current position as a departure point. Moreover, in the route search, the CPU 22 uses the map data stored in the ROM 23. Incidentally, the processing method of the route search itself is already known, so the detailed explanation is omitted. Basically, a plurality of routes connecting the departure point and the destination point are calculated using the map data, and of them, the route that matches the searched conditions is selected and regarded as the route to guide the movable body.

Then, under the control of the CPU 22, a guidance route is determined by the route search (step S120).

Then, under the control of the CPU 22, the route guidance is started (step S130).

Then, under the control of the CPU 22, the current position of the navigation apparatus 1 is regularly obtained from the GPS receiver 18 (step S140).

Then, under the control of the CPU 22, a display scale on the display screen of the display 44 is obtained (step S150).

Then, under the control of the CPU 22, the current position of the navigation apparatus 1 and a temporary objective point corresponding to the display scale are determined on the basis of a database which defines a relationship between the temporary objective point and the display scale, i.e. a route database (step S160). Incidentally, the relationship between the temporary objective point and the display scale will be described later.

Then, under the control of the CPU 22, a map, a route (guided route) from the current position to the destination point on the map, and an index which indicates a direction to the temporary objective point are displayed on the display screen of the display 44 (step S170). Incidentally, the display of the index which indicates the direction to the temporary objective point will be described later.

Then, under the control of the CPU 22, it is judged whether or not the navigation apparatus 1 arrives at the destination point and the route search process, the route guidance process, and the index display process are to be ended (step S180). Here, if the navigation apparatus 1 arrives at the destination point and the route search process, the route guidance process, and the index display process are to be ended (the step S180: Yes), the series of processes are ended. On the other hand, if the route search process, the route guidance process, and the index display process are to be continued (the step S180: No), then under the control of the CPU 22, the current position of the navigation apparatus 1 continues to be regularly obtained from the GPS receiver 18 (step S140).

### (3) Method of displaying index

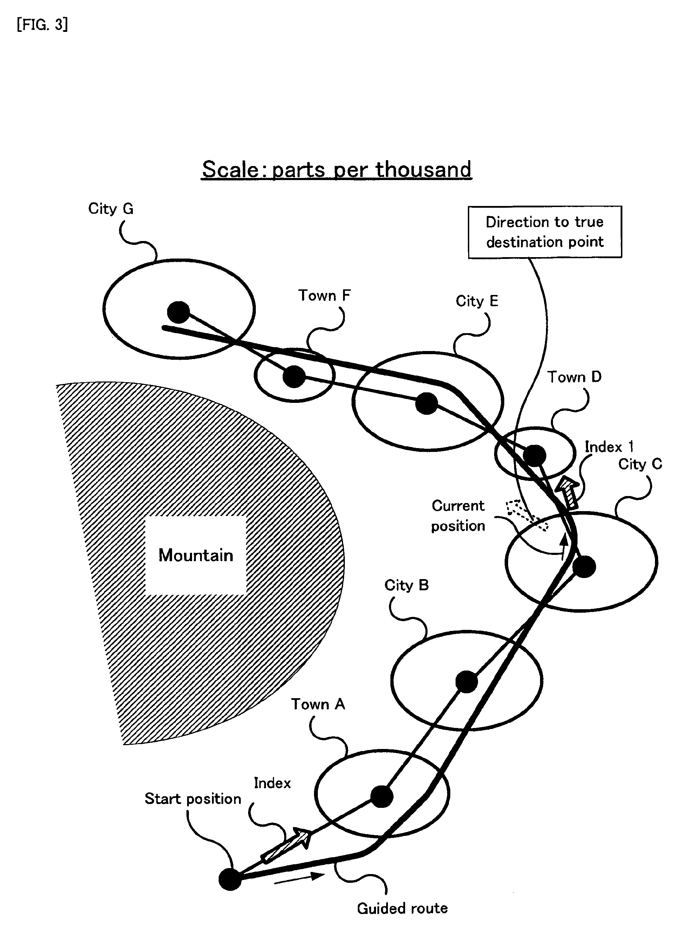

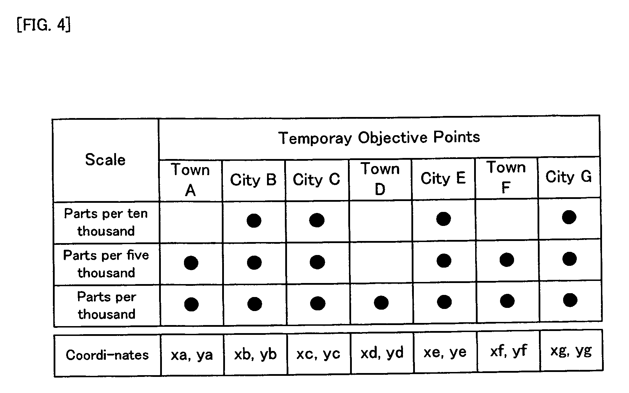

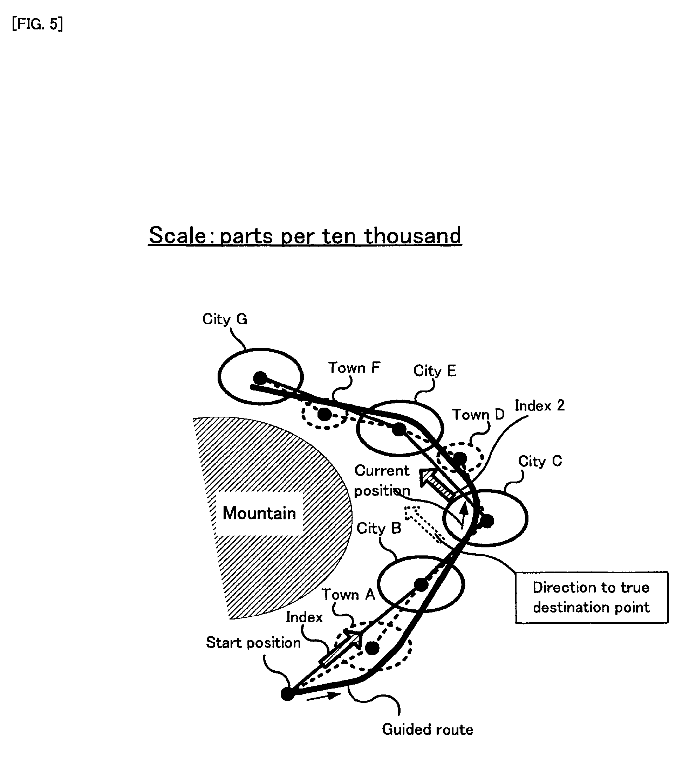

Next, with reference to FIG. 3 to FIG. 5, an explanation will be given on a method of displaying the index in the embodiment. FIG. 3 is a schematic diagram conceptually showing one example of the display screen on which the guided route and the index in the embodiment, are displayed. FIG. 4 is a table showing a relationship between (i) a temporary objective point indicated by the index in the embodiment and (ii) a display scale. FIG. 5 is a schematic diagram conceptually showing another example of the display screen on which the guided route and the index in the embodiment, are displayed. Incidentally, a thick curve in FIG. 3 and FIG. 5, indicates the guided route, a thin arrow indicates the travelling direction of the movable body on the guided route, a big arrow indicates the index which indicates the direction to the temporary objective point, and a thin polygonal line indicates the direction to the temporary objective point.

As shown in FIG. 3, under the control of the system controller 20, (i) the map, (ii) the guided route from the current position to the destination point on the map, and (iii) the index which indicates the direction of the temporary objective point are displayed on the display screen of the display 44. Incidentally, the index which indicates the direction of the temporary objective point, may be shown by the user with a straight line, an arrow, or other graphics.

In particular, in the embodiment, the temporary objective point may be dynamically changed in accordance with the display scale on the display screen. Specifically, as shown on a table in FIG. 4, if the display scale is for example, parts per thousand, the temporary objective points may be representative points representing "town A", "city B", "city C", "town D", "city E", "town F", and "city G", which are on or near the guided route. Incidentally, as the representative point, a city hall, a town office, or a village office can be listed, in which there exists only one in administrative organs, such as municipal governments. Therefore, the index which indicates the direction to the temporary objective point administratively or logically determined, such as the city hall of the administrative organs, can be displayed for the user of the movable body. Moreover, as another example of the temporary objective point, it is possible to list (i) a start point or an end point of the guided route included in an administrative district, such as a city, a town, and a village, or (ii) a midpoint of a way or a way length of the guided route included in the administrative district. Therefore, the index which indicates the direction to the temporary objective point geographically determined, such as the administrative district, can be displayed for the user of the movable body. Moreover, as another example of the temporary objective point, it is possible to list a position which is the center of gravity of area size of the administrative district, such as a city, a town, and a village. Incidentally, a method of calculating the position which is the center of gravity, may be based on the conventional method. Therefore, the index which indicates the direction to the temporary objective point determined on the basis of the position which is the center of gravity of area size of the administrative district, such as a city, a town, and a village, can be displayed accurately and appropriately for the user of the movable body.

As a result, in the embodiment, instead of the direction which indicates the true destination point, the direction which indicates the temporary objective point is displayed, so that it is possible to effectively inhibit that the direction on the road to actually travel on, which is determined on the basis of the route search, is far from the direction which indicates the temporary objective point. Therefore, the user of the movable body can travel or drive at ease, psychologically along the road to actually travel on, which is determined on the basis of the route search.

Alternatively, as shown on the table in FIG. 4, if the display scale is for example parts per ten thousand, the temporary objective point may be representative points representing "city B", "city C", "city E", and "city G", which are on or near the guided route. In other words, if the display scale is small, the temporary objective point is determined on the basis of brief information, such as a large city On the other hand, if the display scale is large, the temporary objective point is determined on the basis of detailed information, such as a city, a town, and a village.

Specifically, if the current position of the movable body is in the "city C" and the display scale is parts per thousand, the "town D" is determined as the temporary objective point on the basis of the table in FIG. 4, and the direction of the index is a direction toward the "town D" as shown in FIG. 3 (refer to an "index 1" in FIG. 3). On the other hand, if the current position of the movable body is in the "city C" and the display scale is parts per ten thousand, the "city E" is determined as the temporary objective point on the basis of the table in FIG. 4, and the direction of the index is a direction toward the "city E" as shown in FIG. 5 (refer to an "index 2" in FIG. 5). Incidentally, an arrow in a dashed line in FIG. 3 and FIG. 5 indicates the "direction which indicates the true destination point" in a comparison example described later.

More specifically, with regard to timing (or time) to change the display of the direction which indicates the temporary objective point, to the display of a direction which indicates a next temporary objective point, in accordance with a change in the current position of the movable body, for example in FIG. 3, if it is judged that the current position of the movable body moves from a "start position" to the "town A", the display of the direction which indicates the temporary objective point in the "town A", may be changed to the display of the direction which indicates the temporary objective point in the "city B". Alternatively, for example in FIG. 3, if it is judged that the way or the way length from the "start position" to the "town A" in the current position of the movable body, is within a predetermined distance (e.g. 1km), the display of the direction which indicates the temporary objective point in the "town A" may be changed to the display of the direction which indicates the temporary objective point in the "city B".

As described above, the temporary objective point is determined in accordance with the display scale of the display screen displayed for the user of the movable body. Therefore, it is possible to more effectively inhibit that the direction on the road to actually travel on, which is determined on the basis of the route search, is far from the direction which indicates the temporary objective point, in accordance with the display scale of the display screen. In addition, it is possible to more simply display (i) the outline of the direction on the road to actually travel on, which is determined on the basis of the route search, and (ii) the outline of the direction which indicates the temporary objective point, for the user of the movable body, in accordance with the display scale of the display screen.

### (4) Study of operation and effect in embodiment

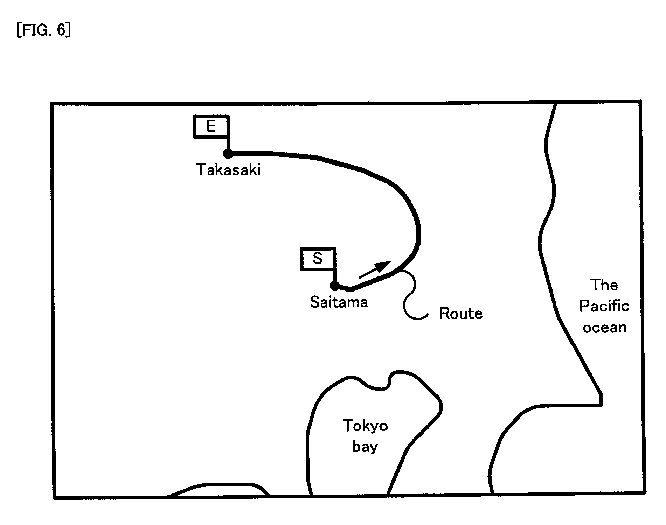

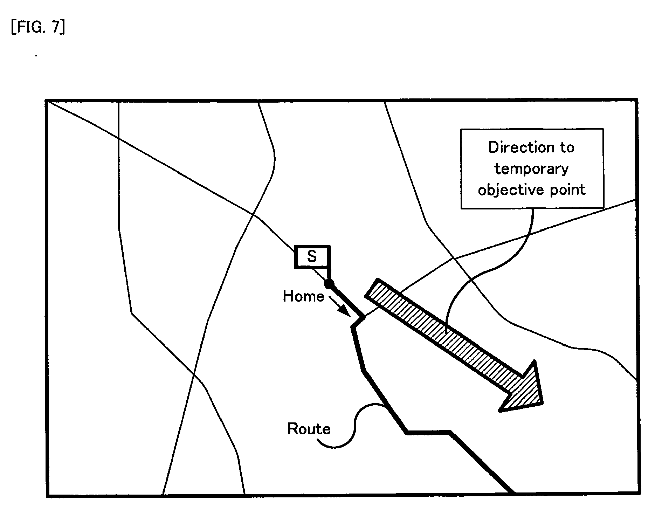

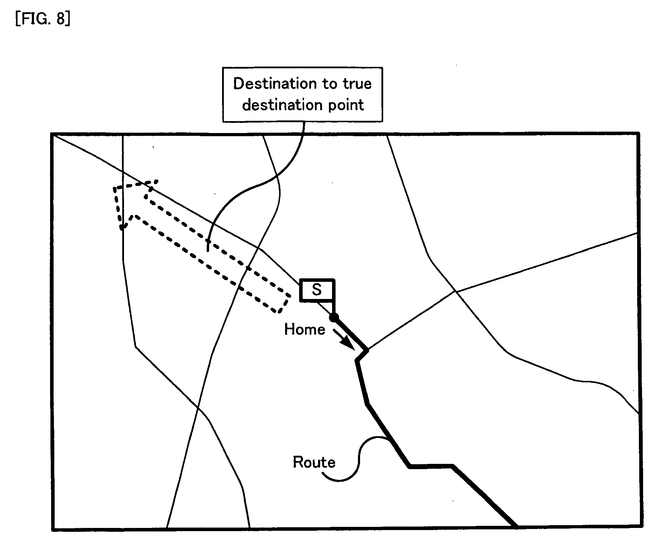

Next, with reference to FIG. 6 to FIG. 8, the operation and effect in the embodiment will be studied. FIG. 6 is a schematic diagram schematically showing the display screen in which an entire portion of both the map and the guided route from the current position to the destination point on the map, are displayed, in the embodiment. FIG. 7 is a schematic diagram schematically showing the display screen in which one portion of both the map and the guided route from the current position to the destination point on the map, are displayed, in the embodiment. FIG. 8 is a schematic diagram schematically showing the display screen in which one portion of both the map and the guided route from the current position to the destination point on the map, are displayed, in a comparison example.

As shown in FIG. 6 and FIG. 7, instead of the direction which indicates the true destination point (e.g. north-westerly direction which is a direction from "Saitama" to "Takasaki"), the direction which indicates the temporary objective point, is displayed for the user of the movable body. Thus, it is possible to effectively inhibit that the direction on the road to actually travel on, which is determined on the basis of the route search, is far from the direction which indicates the temporary objective point.

If the direction which indicates the true destination point is displayed for the user of the movable body, as shown in FIG. 8, the direction on the road to actually travel on, which is determined on the basis of the route search, is far from the direction which indicates the true destination point (e.g. north-westerly direction which is the direction from "Saitama" to "Takasaki"), which raises the user's fears, psychologically.

In contrast, according to the present invention, instead of the direction which indicates the true destination point, the direction which indicates the temporary objective point, is displayed, so that it is possible to effectively inhibit that the direction on the road to actually travel on, which is determined on the basis of the route search, is far from the direction which indicates the temporary objective point.

As a result, the user of the movable body can travel or drive at ease, psychologically along the road to actually travel on, which is determined on the basis of the route search.

In the aforementioned embodiment, the car navigation apparatus and the on-vehicle information processing apparatus are explained as one example of the navigation apparatus. The present invention, however, may be applied to a navigation apparatus mounted on information equipment, such as a mobile phone and a PDA (Personal Digital Assistant).

### Industrial Applicability

The navigation apparatus and method, the navigation program, and the memory medium according to the present invention can be applied to a navigation apparatus which enable the user of the movable body to travel or drive at ease, psychologically along the road to actually travel on, which is determined on the basis of the route search. Moreover, they can be applied to a navigation apparatus or the like which is mounted on various computer equipment for consumer use or for commercial use, or which can be connected to various computer equipment.

## Claims

1. A navigation apparatus (1) comprising:
a route setting device (22) for setting a route to a true destination point at which it is desired to arrive, from a current position of a movable body;
a determining device (22) for determining a temporary objective point which exists on or near the route;
a displaying device (44) having a display screen on which the route is displayed; and
a controlling device (22) for controlling said displaying device to display an index which indicates a direction of the determined temporary objective point, in addition to the route,
**characterized in that**
said determining device is configured to dynamically determine a representative point which represents an administrative district located on the route, one of a start point and an end point of the route which is included in the administrative district, or a middle point of a way which is included in the administrative district, as the temporary objective point, in accordance with a display scale on the display screen.

2. The navigation apparatus according to claim 1, wherein the index (index1, index2) is a graphic in a predetermined shape and in a predetermined color.

3. The navigation apparatus according to claim 1, further comprising an obtaining device (18) for obtaining information as for the current position of the movable body.

4. A navigation method (1) comprising:
a route setting process (22) of setting a route to a true destination point at which it is desired to arrive, from a current position of a movable body;
a determining process (22) of determining a temporary objective point which exists on or near the route; and
a controlling process (22) of controlling a displaying device having a display screen on which the route is displayed, to display an index which indicates a direction of the determined temporary objective point, in addition to the route,
**characterized in that**
said determining process (22) dynamically determining a representative point which represents an administrative district located on the route, one of a start point and an end point of the route which is included in the administrative district, or a middle point of a way which is included in the administrative district, as the temporary objective point, in accordance with a display scale on the display screen.

5. A navigation program executed on a navigation apparatus (1) comprising a positioning apparatus for positioning a current position of a movable body; and a computer, said navigation program making the computer function as:
a route setting device (22) for setting a route to a true destination point at which it is desired to arrive, from the current position of the movable body;
a determining device (22) for determining a temporary objective point which exists on or near the route;
a displaying device (44) having a display screen on which the route is displayed; and
a controlling device (22) for controlling said displaying device to display an index which indicates a direction of the determined temporary objective point, in addition to the route,
**characterized in that**
said navigation program making the computer function such that said determining device (22) is configured to dynamically determine a representative point which represents an administrative district located on the route, one of a start point and an end point of the route which is included in the administrative district, or a middle point of a way which is included in the administrative district, as the temporary objective point, in accordance with a display scale on the display screen.

6. A memory medium storing the navigation program according to claim 5.

## Patentansprüche

1. Eine Navigationsvorrichtung (1), aufweisend:
eine Routeneinstellvorrichtung (22) zum Einstellen einer Route auf einen wahren Zielpunkt, an dem eine Ankunft erwünscht ist, von einer aktuellen Position eines bewegbaren Körpers aus,
eine Ermittlungsvorrichtung (22) zum Ermitteln eines temporären Zielpunktes, der sich auf oder in der Nähe der Route befindet,
eine Anzeigevorrichtung (44), die einen Anzeigebildschirm aufweist, auf dem die Route angezeigt wird, und
eine Steuervorrichtung (22) zum Steuern der Anzeigevorrichtung zum Anzeigen eines Indexes, der eine Richtung des ermittelten temporären Zielpunktes anzeigt, zusätzlich zu der Route,
**dadurch gekennzeichnet, dass**
die Ermittlungsvorrichtung eingerichtet ist zum dynamischen Ermitteln eines repräsentativen Punktes, der darstellt: einen Verwaltungsbereich, der sich auf der Route befindet, einen von einem Startpunkt und einem Endpunkt der Route, der sich In dem Verwaltungsbereich befindet, oder einen Mittelpunkt eines Weges, der sich in dem Verwaltungsbereich befindet, als den temporäre Zielpunkt, gemäß einem Anzeigemaßstab auf dem Bildschirm.

2. Die Navigationsvorrichtung gemäß Anspruch 1, wobei der Index (Index1, Index2) eine Grafik in einer vorbestimmten Form und in einer vorbestimmten Farbe ist.

3. Die Navigationsvorrichtung gemäß Anspruch 1, ferner aufweisend eine Erhaltungsvorrichtung (18) zum Erhalten von Informationen bezüglich der aktuellen Position des bewegbaren Objekts.

4. Ein Navigationsverfahren (1), aufweisend:
einen Routeneinstellvorgang (22) zum Einstellen einer Route auf einen wahren Zielpunkt, an dem eine Ankunft erwünscht ist, von einer aktuellen Position eines bewegbaren Körpers aus,
einen Ermittlungsvorgang (22) zum Ermitteln eines temporären Zielpunktes, der sich auf oder in der Nahe der Route befindet, und
einen Steuervorgang (22) zum Steuern einer Anzeigevorrichtung, die einen Anzeigebildschirm aufweist, auf dem die Route angezeigt wird, zum Anzeigen eines Indexes, der eine Richtung des ermittelten temporären Zielpunktes anzeigt, zusätzlich zu der Route,
**dadurch gekennzeichnet, dass**
der Ermittlungsvorgang (22) dynamisch einen repräsentativen Punkt ermittelt, der darstellt: einen Verwaltungsbereich, der sich auf der Route befindet, einen von einem Startpunkt und einem Endpunkt der Route, der sich in dem Verwaltungsbereich befindet, oder einen Mittelpunkt eines Weges, der sich in dem Verwaltungsbereich befindet, als den temporären Zielpunkt, entsprechend einem Anzeigemaßstab auf dem Anzeigebildschirm.

5. Ein Navigationsprogramm, das auf einer Navigationsvorrichtung (1) ausgeführt wird, aufweisend eine Positionierungsvorrichtung zum Positionieren einer aktuellen Position eines bewegbaren Körpers, und einen Rechner, wobei das Navigationsprogramm bewirkt, dass der Rechner funktioniert als:
eine Routeneinstellvorrichtung (22) zum Einstellen einer Route auf einen wahren Zielpunkt, an dem eine Ankunft erwünscht ist, von der aktuellen Position des bewegbaren Körpers aus,
eine Ermittlungsvorrichtung (22) zum Ermitteln eines temporären Zielpunktes, der sich auf oder in der Nähe der Route befindet,
eine Anzeigevorrichtung (44), die einen Anzeigebildschirm aufweist, auf dem die Route angezeigt wird, und
eine Steuervorrichtung (22) zum Steuern der Anzeigevorrichtung zum Anzeigen eines Indexes, der eine Richtung des ermittelten temporären Zielpunktes anzeigt, zusätzlich zu der Route,
**dadurch gekennzeichnet, dass**
das Navigationsprogramm bewirkt, dass der Rechner derart funktioniert, dass die Ermittlungsvorrichtung (22) zum dynamischen Ermitteln eines repräsentativen Punktes eingerichtet ist, der darstellt: einen Verwaltungsbereich, der sich auf der Route befindet, einen von einem Startpunkt und einem Endpunkt der Route, der sich in dem Verwaltungsbereich befindet, oder einen Mittelpunkt eines Weges, der sich in dem Verwaltungsbereich befindet, als den Zielpunkt, gemäß einem Anzeigemaßstab auf dem Anzeigebildschirm.

6. Ein Speichermedium, das das Navigationsprogramm gemäß Anspruch 5 speichert.

## Revendications

1. Appareil de navigation (1) comprenant :
un dispositif d'établissement d'itinéraire (22) pour établir un itinéraire vers un point de destination réel où l'on souhaite se rendre, à partir de la position actuelle d'un corps mobile ;
un dispositif de détermination (22) pour déterminer un point cible temporaire qui existe sur l'itinéraire ou à proximité de celui-ci ;
un dispositif d'affichage (44) présentant un écran d'affichage sur lequel est affiché l'itinéraire; et
un dispositif de commande (22) pour commander ledit dispositif d'affichage afin d'afficher un indicateur qui indique la direction du point cible temporaire déterminé, en plus de l'itinéraire ;
**caractérisé en ce que** :
ledit dispositif de détermination est configuré pour déterminer de façon dynamique un point représentatif qui représente une région administrative située sur l'itinéraire, l'un d'un point de départ et d'un point d'arrivée de l'itinéraire qui est inclus dans la région administrative, ou d'un point intermédiaire d'une route qui est inclus dans la région administrative, en tant que point cible temporaire, selon une échelle d'affichage sur l'écran d'affichage.

2. Appareil de navigation selon la revendication 1, dans lequel l'indicateur (index 1, index 2) est un symbole graphique présentant une forme prédéterminée et une couleur prédéterminée.

3. Appareil de navigation selon la revendication 1, comprenant en outre un dispositif d'obtention (18) pour obtenir des informations se rapportant à la position actuelle du corps mobile.

4. Procédé de navigation (1) comprenant :
un processus d'établissement d'itinéraire (22) consistant à établir un itinéraire vers un point de destination réel où l'on souhaite se rendre, à partir d'une position actuelle d'un corps mobile ;
un processus de détermination (22) consistant à déterminer un point cible temporaire qui existe sur l'itinéraire ou à proximité de celui-ci ; et
un processus de commande (22) consistant à commander un dispositif d'affichage qui présente un écran d'affichage sur lequel est affiché l'itinéraire, afin d'afficher un indicateur qui indique la direction du point cible temporaire déterminé, en plus de l'itinéraire ;
**caractérisé en ce que** :
ledit processus de détermination (22) détermine de façon dynamique un point représentatif qui représente une région administrative située sur l'itinéraire, l'un d'un point de départ et d'un point d'arrivée de l'itinéraire qui est inclus dans la région administrative, ou d'un point intermédiaire d'une route qui est inclus dans la région administrative, en tant que point cible temporaire, selon une échelle d'affichage sur l'écran d'affichage.

5. Programme de navigation exécuté sur un appareil de navigation (1) qui comprend un appareil de positionnement destiné à positionner la position actuelle d'un corps mobile ; et un ordinateur, ledit programme de navigation faisant fonctionner l'ordinateur en tant que :
dispositif d'établissement d'itinéraire (22) pour établir un itinéraire vers un point de destination réel où l'on souhaite se rendre, à partir de la position actuelle du corps mobile ;
dispositif de détermination (22) pour déterminer un point cible temporaire qui existe sur l'itinéraire ou à proximité de celui-ci ;
dispositif d'affichage (44) présentant un écran d'affichage sur lequel est affiché l'itinéraire ; et
dispositif de commande (22) pour commander ledit dispositif d'affichage afin d'afficher un indicateur qui indique la direction du point cible temporaire déterminé, en plus de l'itinéraire ;
**caractérisé en ce que** :
ledit programme de navigation fait fonctionner l'ordinateur de telle sorte que ledit dispositif de détermination (22) soit configuré pour déterminer de façon dynamique un point représentatif qui représente une région administrative située sur l'itinéraire, l'un d'un point de départ et d'un point d'arrivée de l'itinéraire qui est inclus dans la région administrative, ou d'un point intermédiaire d'une route qui est inclus dans la région administrative, en tant que point cible temporaire, selon une échelle d'affichage sur l'écran d'affichage.

6. Support de mémoire stockant le programme de navigation selon la revendication 5.
